# EUROPÄISCHE PATENTSCHRIFT

(11) **EP 2 692 001 B1**
(45) Veröffentlichungstag und Bekanntmachung des Hinweises auf die Patenterteilung: **16.12.2015**
(21) Anmeldenummer: 12717593.3
(22) Anmeldetag: 24.03.2012
(51) Int. Cl.: H01M 10/6553, H01M 2/10, H01M 2/20, H01M 10/6555

(54) **BATTERIE FÜR EIN KRAFTFAHRZEUG**
BATTERY FOR A MOTOR VEHICLE
BATTERIE POUR VÉHICULE AUTOMOBILE

(30) Priorität: 31.03.2011 DE 102011015622
(43) Veröffentlichungstag der Anmeldung: 05.02.2014
(73) Patentinhaber: Audi AG, 85045 Ingolstadt (DE)
(72) Erfinder: FEES, Heiner, 74321 Bietigheim-Bissingen (DE)
(74) Vertreter: Herbst, Matthias Heinz
(86) Internationale Anmeldenummer: PCT/EP2012/001302
(87) Internationale Veröffentlichungsnummer: WO 2012/130424

(56) Entgegenhaltungen:
- EP-A1- 2 613 379
- WO-A1-2010/150439
- DE-A1-102007 044 461
- DE-A1-102010 045 707
- US-A1- 2008 241 667

## Beschreibung

Die Erfindung betrifft eine Kraftfahrzeug-Batterie mit einer Mehrzahl von Batteriezellen, die in zumindest zwei Reihen achsparallel nebeneinander angeordnet sind und von denen zumindest einige über ein Leitelement elektrisch mit einem Anschlusselement verbunden sind, über welches die Batterie an das Kraftfahrzeug angeschlossen werden kann.

Ein Kraftfahrzeug, wie z.B. ein Personkraftwagen, kann verschiedene Typen von Batterien aufweisen, beispielsweise eine Starter-Batterie oder eine Hochvolt-Traktionsbatterie. Im Zusammenhang mit der Erfindung ist mit dem Begriff Batterie ein Batterie beliebigen Typs gemeint. Unter einer Batterie wird auch eine wiederaufladbare Batterie, d.h. ein Akkumulator, verstanden.

Die Erzeugung von elektrischer Energie erfolgt in einer Batterie durch eine oder mehrere galvanischen Zellen. Eine solche galvanische Zelle kann innerhalb der Batterie in einem in sich geschlossenen Behältnis bereitgestellt sein, das vorliegend als Batteriezelle bezeichnet wird. Bei der Herstellung einer Kraftfahrzeug-Batterie werden eine oder mehrere solcher Batteriezellen in einem Gehäuse der Batterie angeordnet und über elektrische Leiter miteinander verschaltet, so dass den Batteriezellen elektrische Energie entnommen und über die Anschlusselemente der Batterie z.B. einem Bordnetz des Kraftfahrzeugs zugeführt werden kann bzw. von dort in die Batteriezellen eingespeist werden kann.

Die Herstellungskosten einer Batterie werden unter anderem durch den Aufwand bestimmt, der zum Verdrahten der Batteriezellen nötig ist. Aus der US 7,671,565 B2 ist dazu bekannt, Rundzellen in einer Batterie achsparallel nebeneinander zwischen zwei gelochten, elektrisch leitenden Platten anzuordnen. Durch die Löcher der Platten hindurch kann die Platte dann mit jeweiligen Anschlusspolen (Plus-Pol und Minus-Pol) an den Stirnseiten der Rundzellen elektrisch verbunden werden.

Eine Batterie muss in einem Massenfertigungsprozess kostengünstig und dennoch mit hoher Zuverlässigkeit fehlerfrei herstellbar sein.

In der EP 2 613 379 A1 und dem Dokument WO 2012/029235 A1 ist eine Batterie mit parallel nebeneinander angeordneten Rundzellen beschrieben, die untereinander durch zwei Platten elektrisch parallel geschaltet sind. Jede der Platten liegt jeweils an einem Ende der zylindrischen Rundzellen auf. Damit die Rundzellen zwischen den Platten nicht verrutschen, können die Platten jeweils Vertiefungen aufweisen, in welche jeweils eine der Rundzellen angeordnet ist. Indem jede der Platten direkt auf einem Anschlusskontakt der Rundzellen aufliegt, sind die Rundzellen ohne weitere Kontaktiermittel direkt mit den beiden Platten elektrisch verbunden. Eine Batterie mit einem ähnlichen Leitelement wie in der EP 2 613 378 ist in dem Dokument US 2008241667 offenbart.

Es ist Aufgabe der vorliegenden Erfindung, eine kostengünstig herstellbare Batterie für ein Kraftfahrzeug bereitzustellen.

Die Aufgabe wird durch eine Batterie gemäß Anspruch 1 gelöst. Vorteilhafte Weiterbildungen der Erfindung sind durch die Unteransprüche gegeben.

Die erfindungsgemäße Kraftfahrzeug-Batterie umfasst eine Mehrzahl von Batteriezellen. Bevorzugt sind Rundzellen verwendet. Allgemein handelt es sich aber bei den Batteriezellen der erfindungsgemäßen Batterie um Batteriezellen, von denen jede eine durch eine Grundform der Batteriezelle vorgegebene Längsachse aufweist. Im Falle einer Rundzelle ist die Längsachse entsprechend durch die Symmetrieachse ihrer zylindrischen Grundform gebildet. Zumindest ein Anschlusspol (Plus- oder Minus-Pol) jeder Batteriezelle befindet sich an einer jeweiligen Stirnseite, die sich quer zur Längsachse der Batteriezelle erstreckt. Bei der erfindungsgemäßen Batterie sind die Batteriezellen achsparallel nebeneinander in zumindest zwei Reihen angeordnet, so dass die Stirnseiten der Batteriezellen von einer gemeinsamen Seite her zugänglich sind. Die erfindungsgemäße Batterie weist zudem ein elektrisches Leitelement (z.B. eine Platte) auf, die zumindest bereichsweise zwischen den beiden Reihen angeordnet ist. Über das Leitelement ist jeweils ein Anschlusspol der Batteriezellen von zumindest einer der beiden Reihen mit einem Anschlusselement der Batterie elektrisch verbunden. Mit dem Anschlusselement ist ein Element gemeint, über das die Batterie an das Kraftfahrzeug angeschlossen werden kann.

Die erfindungsgemäße Batterie weist zwei besondere Vorteile auf. Bei der Herstellung der Batterie werden durch Anordnen des Leitelements zwischen den Batteriezellen nicht die Bewegungen eines Werkzeugs zum Verdrahten der Batteriezellen behindert. Im Betrieb der Batterie wird über das Leitelement Wärme aus den Batteriezellen an eine Umgebung der Batterie abgeführt.

Eine besonders einfache und damit kostengünstige Bauweise der Batterie ergibt sich, wenn das Leitelement eine elektrisch leitende Platte umfasst. Eine Flächennormale der Platte steht dabei senkrecht zu den Längsachsen der Batteriezellen.

Das Leitelement, also z.B. die elektrisch leitende Platte, weist zumindest einen Anschlussbereich auf, in welchem ein elektrisches Koppelelement zum elektrischen Verbinden des Leitelements mit zumindest einem der Anschlusspole befestigt ist. Das Koppelelement kann z.B. ein Bonddraht sein, der mittels eines entsprechenden Bonding-Verfahrens am Leitelement angebracht ist. Durch Ausbilden von entsprechenden Anschlussbereichen am Leitelement wird eine automatisierte Herstellung der Batterie ermöglicht.

Bei einer anderen Weiterbildung der erfindungsgemäßen Batterie ist zusätzlich auch jeweils ein Anschlusspol der Batteriezellen der anderen Batteriezellen-Reihe über das Leitelement mit dem Anschlusselement der Batterie elektrisch verbunden. So kann über das Leitelement Strom aus den Batteriezellen beiderseits des Leitelements entnommen bzw. diesen zugeführt werden. Mit einem einzigen Leitelement sind somit in vorteilhafter Weise zwei Reihen von Batteriezellen verschaltet. Zudem lässt sich eine besonders geringe Fertigungszeit der Batterie ermöglichen, wenn jeweils eine Batteriezelle einer Reihe zusammen mit einer ihr auf der anderen Seite des Leitelements gegenüber befindlichen Batteriezelle der anderen Reihe an einem gemeinsamen Anschlussbereich des zwischen ihnen befindlichen Leitelements angeschlossen wird. Dann können mittels eines einzigen Drahtes z.B. durch ein Bonding-Verfahren beide Batteriezellen mit dem Leitelement elektrisch verbunden werden.

Bei der erfindungsgemäßen Batterie ist es möglich, weitere Doppelreihen von Batteriezellen vorzusehen, zwischen denen sich jeweils ein weiteres Leitelement der genannten Art befindet. In diesem Zusammenhang kann dann vorgesehen sein, eine Sammelschiene vorzusehen, über welche die Leitelemente gemeinsam mit dem Anschlusselement der Batterie elektrisch gekoppelt sind.

Eine andere vorteilhafte Weiterbildung der erfindungsgemäßen Batterie sieht vor, das Leitelement als einen Bestandteil eines Halteelements auszubilden, in welches die Batteriezellen eingesetzt und durch welches die Batteriezellen in einem Gehäuse der Batterie gehalten sind. Ein solches Halteelement oder Magazin, in welches mehrere Batteriezellen bei der Montage einer erfindungsgemäßen Batterie eingesetzt werden können, um dann gemeinsam in das Gehäuse eingesetzt zu werden, ermöglicht eine Verringerung der Anzahl der Montageschritte zur Herstellung der Batterie und damit auch deren Herstellungskosten. Zudem ist durch die feste Verbindung des Leitelements mit dem Haltelement zum Halten der Batteriezellen sichergestellt, dass das Leitelement und die Batteriezellen gegeneinander fixiert sind. Dadurch ist in vorteilhafter Weise vermieden, dass die elektrischen Verbindungen zwischen dem Leitelement und den Batteriezellen brechen, wenn die Batterie bei einer Fahrt des Kraftfahrzeugs erschüttert wird.

Bei einer anderen Weiterbildung der erfindungsgemäßen Batterie ist bei den Batteriezellen jeweils ein weiterer Anschlusspol an der Stirnseite bereitgestellt. Dadurch ergibt sich der Vorteil, dass bei der Herstellung der Batterie sowohl der Plus- als auch der Minus-Pol der Batteriezellen von derselben Seite her verschaltet werden können. Dies vereinfacht eine automatisierte Herstellung mit einem robotergeführten Werkzeug.

Sind die Stirnseiten in einer gemeinsamen Ebene angeordnet, erlaubt dies besonders schnelle Bewegungen des Werkzeugs, was eine besonders kurze Herstellungsdauer ermöglicht.

Als ein zweites Leitelement zum Ermöglichen eines geschlossenen Stromkreises kann eine elektrisch leitende Platte bereitgestellt sein, welche parallel zu den Stirnseiten der Batteriezellen angeordnet ist. Mit anderen Worten werden die Reihen von Batteriezellen von ihren Stirnseiten her von der Platte abgedeckt. Die Flächennormale der Platte ist dann parallel zu den Längsachsen der Batteriezellen ausgerichtet. Die Platte ist dabei mit jeweils einem Anschlusspol der Batteriezellen elektrisch verbunden. Ein Stromfluss in einem Stromkreis ist dann über das Leitelement zwischen den Batteriezellen einerseits und die Platte auf den Stirnseiten der Batteriezellen andererseits ermöglicht.

Die Batteriezellen sind dabei bevorzugt zu einer Parallelschaltung verschaltet. Mittels der erfindungsgemäßen Batterie können die dabei entstehenden Ströme hoher Stromstärke problemlos über das zwischen den Reihen der Batteriezellen befindlichen Leitelement geführt werden.

Die Erfindung wird im Folgenden anhand eines Ausführungsbeispiels näher erläutert. Dazu zeigt:
- Fig. 1: eine perspektivische Darstellung eines Magazins mit darin eingesetzten Rundzellen für eine Batterie gemäß einer Ausführungsform der Erfindung;
- Fig. 2: eine perspektivische Darstellung einer Kontaktplatte, die Bestandteil des in Fig. 1 gezeigten Magazins ist;
- Fig. 3: eine perspektivische Darstellung des Magazins aus Fig. 1 ohne die Rundzellen;
- Fig. 4: eine perspektivische Darstellung einer Batterie, in welche das Magazin aus Fig. 1 eingesetzt ist;
- Fig. 5: eine perspektivische Darstellung der Batterie aus Fig. 4 mit einer auf die Rundzellen aufgesetzten Kontaktplatte zum Anschließen von Plus-Polen der Rundzellen und mit einer Sammelschiene; und
- Fig. 6: eine schematische Darstellung eines Schnitts durch die Batterie, wie sie in Fig. 5 dargestellt ist.

Das Beispiel stellt eine bevorzugte Ausführungsform der Erfindung dar.

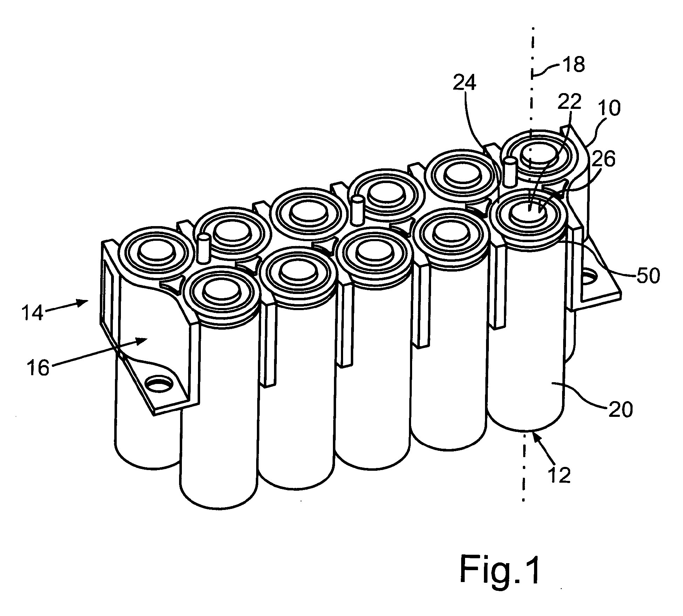

In Fig. 1 ist ein Magazin 10 mit elf darin einsetzten Rundzellen gezeigt, von denen der Übersichtlichkeit halber nur eine Rundzelle 12 mit einem Bezugszeichen versehen ist. Die Rundzellen sind in dem Magazin nebeneinander in zwei Reihen 14 und 16 aufgereiht. Die Rundzelle 12 weist (wie auch die übrigen Rundzellen) eine längliche, zylindrische Grundform auf. Eine Symmetrieachse bzw. Längsachse 18 der Rundzelle 12 ist parallel zu entsprechenden Längsachsen der übrigen Rundzellen ausgerichtet.

Die Rundzelle 12 enthält eine galvanische Zelle zum Speichern von elektrochemischer Energie. Ein Zellenbecher 20 der Rundzelle 12 bildet einen Minus-Pol, ein Deckel 22 einen Plus-Pol. Der Deckel 22 und ein oberer Rand 24 des Zellenbechers 20 bilden eine Stirnseite 26 der Rundzelle 12. Sowohl der Minus-Pol (Zellenbecher 20) als auch der Plus-Pol (Deckel 22) können über die Stirnseite 26 elektrisch kontaktiert werden.

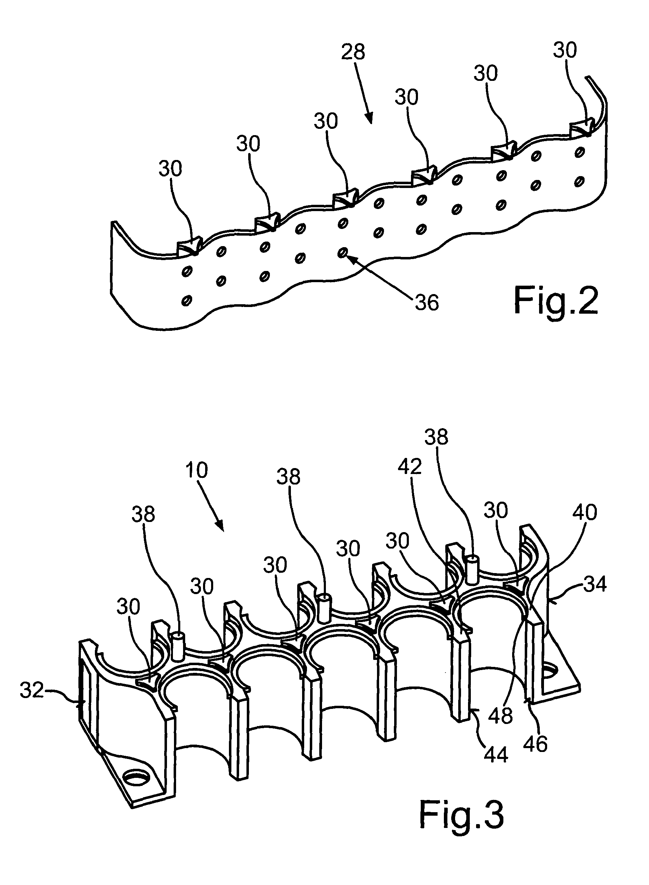

Zum Verschalten der Minus-Pole der Rundzellen für eine Parallelschaltung der Rundzellen befindet sich zwischen den beiden Reihen 14 und 16 von Rundzellen in dem Magazin 10 eine in Fig. 2 genauer gezeigte Kontaktplatte 28, die in dem Beispiel aus einem Blechbiegeteil gefertigt ist. Die Kontaktplatte 28 ist ein elektrisches Leitelement, über welches ein elektrischer Strom von den Rundzellen abgeführt oder zu diesen hingeführt werden kann. Zum Kontaktieren der Kontaktplatte 28 mit den einzelnen Rundzellen sind an der Kontaktplatte 28 Kontaktierungslaschen 30 ausgebildet.

Das Magazin 10 ist in dem gezeigten Beispiel durch Umspritzen der Kontaktplatte 28 mittels eines Kunststoff-Spritzgussverfahrens hergestellt. In Fig. 3 ist das vollständige Magazin 10 noch einmal allein, ohne die Rundzellen dargestellt. Von der Kontaktplatte 28 sind neben den Kontaktierungslaschen 30 noch zwei Kontaktflächen 32 und 34 freigelassen, über welche die Kontaktplatte 28 von außerhalb des Magazins 10 elektrisch kontaktiert werden kann. In Fig. 3 ist nur die Kontaktfläche 32 sichtbar.

Für einen besseren Halt der Kontaktplatte 28 in dem sie umgebenden Kunststoff weist die Kontaktplatte 28 Durchgangsöffnungen auf, von denen der Übersichtlichkeit halber in Fig. 2 nur eine Durchgangsöffnung 36 mit einem Bezugszeichen versehen ist.

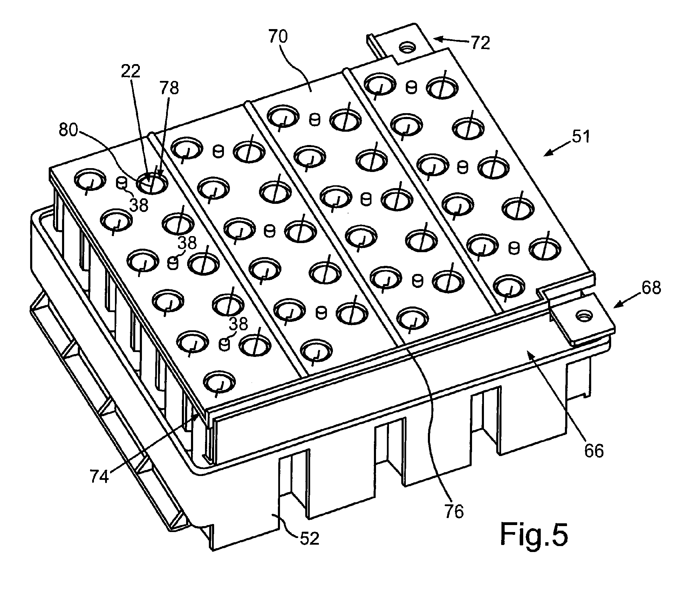

Mittels des Spritzgussverfahrens sind an dem Magazin 10 Stifte 38 angeformt, deren Funktion weiter unten im Zusammenhang mit Fig. 5 beschrieben ist.

Die Rundzelle 12 ist (wie auch die übrigen Rundzellen) in dem Magazin 10 durch eine Schnappverbindung gehalten. Dazu sind zum Halten der Rundzelle 12 an dem Magazin 10 elastische Wände 40, 42 ausgebildet. Zum Einsetzen der Rundzelle 12 in das Magazin 10 wurde die Rundzelle 12 gegen konisch zulaufende Flächen 44, 46 gedrückt, wodurch sich die Wände 40, 42 durch elastische Verformung auseinanderbewegt haben und die Rundzelle 12 zwischen den Wänden 40, 42 in dem Magazin 10 eingeschnappt ist. Ein Steg 48 greift in eine Ringnut 50 der Rundzelle 12, wodurch die Rundzelle 12 gegen ein Verrutschen in dem Magazin 12 entlang ihrer Längsachse 18 gesichert ist.

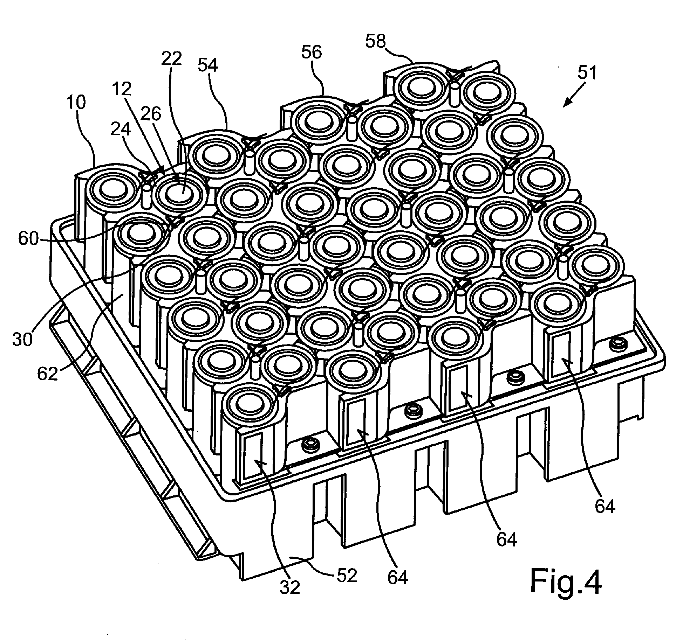

Die Rundzellen des Magazins 10 sollen in ein Gehäuse für eine Traktionsbatterie 51 eines Personenkraftwagens eingebaut und zu einer Parallelschaltung verschaltet werden. Im Folgenden wird dazu der Einbau des Magazins 10 im Zusammenhang mit der Montage der Traktionsbatterie 51 anhand von Fig. 4 näher erläutert.

Das Magazin 10 mit den Rundzellen ist in einen Gehäuseboden 52 der Traktionsbatterie 51 eingesetzt worden. Zusammen mit dem Magazin 10 in dem Beispiel noch drei weitere Magazine 54, 56, 58 derselben Bauart wie das Magazin 10 in dem Gehäuseboden 52 angeordnet. Insgesamt sind somit vier Doppelreihen von Rundzellen mit jeweils zwischen den Reihen einer jeden Doppelreihe befindlichen Kontaktplatten vorhanden.

Die Stirnseite 26 der Rundzelle 12 ist mit Stirnseiten der übrigen Rundzellen in einer Ebene angeordnet. Der Rand 24 des Zellenbechers 20 ist über einen Draht 60 mit einer der Kontaktierungslaschen 30 elektrisch verbunden. Der Draht 60 ist in dem Beispiel mittels eines Bonding-Verfahrens an dem Rand 24 und der Kontaktierungslasche 30 befestigt worden. Der Draht 60 verbindet auch den Rand eines Zellenbechers einer gegenüberliegenden Rundzelle 62 mit derselben Kontaktierungslasche 30. So wurden durch Bonden des einzelnen Drahtes 60 die beiden Rundzellen 12 und 62 in einem Fertigungsschritt mit der Kontaktierungslasche 30 verbunden.

Der Draht 60 ist als elektrische Sicherung ausgelegt. Für den Fall, dass ein elektrischer Strom der Rundzelle 12, der über den Draht 60 fließt, einen vorbestimmten sicherheitskritischen Stromstärkewert überschreitet, schmilzt der Draht 60, wodurch der Stromfluss unterbrochen wird. Dadurch wird eine Beschädigung der Rundzelle 12 oder eines anderen Bauteils in dem Personenkraftwagen vermieden.

Wie in Fig. 4 gezeigt ist, sind auch die übrigen Rundzellen durch Drähte mit jeweiligen Kontaktierungslaschen verbunden. Die Drähte können zum Schutz gegen mechanische Einflüsse und gegen Korrosion mit einer Vergussmasse übergossen sein.

Über die Kontaktfläche 32 der Kontaktplatte 28 und entsprechende Kontaktflächen 64 der Kontaktplatten der übrigen Magazine 54, 56, 58 soll ein jeweiliger Sammelstrom von den Kontaktplatten abgegriffen werden.

In Fig. 5 ist dazu die weitere Verschaltung der Rundzellen gezeigt. Eine Sammelschiene 66 verbindet die Kontaktflächen 32, 64 elektrisch miteinander. Die Sammelschiene 66 besteht aus einer Metallplatte, die hier beispielsweise aus Aluminium oder Kupfer gefertigt ist. Die Sammelschiene 66 ist an den Kontaktflächen 32, 64 mit den Kontaktplatten der Magazine 10, 54, 56, 58 verschweißt.

An der Sammelschiene 66 ist ein Flansch 68 ausgebildet, über den die Sammelschiene 66 an ein (nicht dargestelltes) Kabel des Personenkraftwagens oder an eine weitere Traktionsbatterie angeschlossen werden kann.

Die Plus-Pole der Rundzellen, d.h. der Deckel 22 der Rundzelle 12 und die Deckel der übrigen Rundzellen, sind über eine weitere elektrisch leitende Kontaktplatte 70 miteinander elektrisch verbunden.

Die Kontaktplatte 70 weist einen Flansch 72 auf, der wie der Flansch 68 zum Anschließen der Kontaktplatte 70 an ein Kabel oder eine weitere Traktionsbatterie dient.

An einer in Fig. 5 unteren Seite der Kontaktplatte 70 ist eine Isolierplatte 74 befestigt, die auf die Stirnseiten der Rundzellen aufgelegt ist. Ein Kragen 76 der Isolierplatte 74 verhindert einen elektrischen Überschlag von der Kontaktplatte 70 zur Sammelschiene 66.

Die Kontaktplatte 70 ist mittels eines Bonding-Verfahrens mit den einzelnen Deckeln der Rundzellen verdrahtet. Dazu weist die Kontaktplatte 70 und die mit ihr verbundene Isolierplatte 74 Bohrungen auf. Durch eine solche Bohrung 78 ist ein Draht 80 von der Kontaktplatte 70 zum Deckel 22 geführt.

Die Kontaktplatte 70 ist in der Traktionsbatterie 51 durch die Magazine 10, 54, 56, 58 gehalten. Dazu ist die Kontaktplatte 70 auf die Stifte 38 des Magazins 10 und auf entsprechende Stifte der übrigen Magazine 54, 56, 58 aufgesteckt worden. Anschließend sind die Stifte 38 und die übrigen Stifte hier durch Verstemmen und unter Verwendung von heißem Gas verformt worden, so dass die Kontaktplatte fest auf den Magazinen 10, 54, 56, 58 sitzt.

Durch Aufsetzten eines (nicht dargestellten) Gehäusedeckels auf den Gehäuseboden 52 wird die Traktionsbatterie 51 verschlossen.

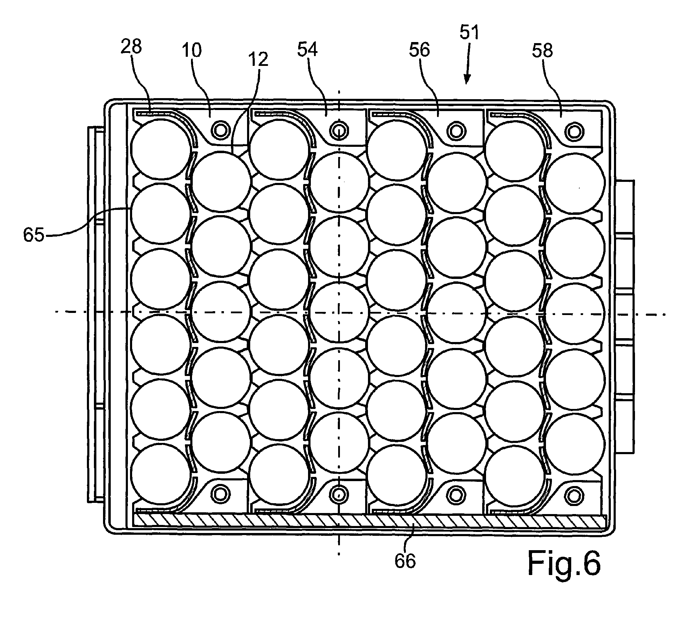

In Fig. 6 ist die fertige Traktionsbatterie 51 in einer Schnittansicht gezeigt. Die Kontaktplatte 28 des Magazins 10 und die Kontaktplatten der übrigen Magazine 54, 56, 58 befinden sich jeweils zwischen zwei Reihen von Rundzellen. Über die Kontaktplatten und die Sammelschiene 66 sind die einzelnen Rundzellen mit der Flansch 68 zum Anschließen der Traktionsbatterie 51 an das Kraftfahrzeug elektrisch verbunden.

Durch das Beispiel ist gezeigt, wie eine kostengünstige Batterie für einen Kraftwagen bereitgestellt werden kann.

## Patentansprüche

1. Batterie (51) für ein Kraftfahrzeug, mit einer Mehrzahl von Batteriezellen (12, 62), von denen jede eine durch eine Grundform der jeweiligen Batteriezelle (12, 62) vorgegebene Längsachse (18) und eine sich quer zur Längsachse (18) erstreckende Stirnseite (26) mit zumindest einem Anschlusspol (22, 24) aufweist, wobei die Batteriezellen (12, 62) achsparallel nebeneinander in zumindest zwei Reihen (14, 16) angeordneten sind und ein elektrisches Leitelement (28), über welches jeweils ein Anschlusspol (24) der Batteriezellen (12, 62) zumindest einer der beiden Reihen (14, 16) mit einem Anschlusselement (68) zum Anschließen der Batterie (51) an das Kraftfahrzeug elektrisch verbunden ist, und welches zumindest einen Anschlussbereich (30) aufweist, in welchem ein elektrisches Koppelelement (60) zum elektrischen Verbinden des Leitelements (28) mit zumindest einem der Anschlusspole (24) befestigt ist.
**dadurch gekennzeichnet, dass** das elektrische Leitelement (28) zumindest bereichsweise zwischen den beiden Reihen (14, 16) angeordnet ist.

2. Batterie (51) nach Anspruch 1, wobei das Leitelement (28) eine elektrisch leitende Platte umfasst.

3. Batterie (51) nach einem der vorhergehenden Ansprüche, wobei zusätzlich auch jeweils ein Anschlusspol der Batteriezellen (62) der anderen Reihe (14) über das Leitelement (28) mit dem Anschlusselement (68) der Batterie (51) elektrisch verbunden ist.

4. Batterie (51) nach einem der vorhergehenden Ansprüche, wobei das Leitelement (28) über eine Sammelschiene (66) mit dem Anschlusselement (68) elektrisch gekoppelt ist.

5. Batterie (51) nach einem der vorhergehenden Ansprüche, wobei das Leitelement (28) ein Bestandteil eines Halteelements (10) ist, in welches die Batteriezellen (12, 62) eingesetzt und durch welches sie in einem Gehäuse (52) der Batterie (51) gehalten sind.

6. Batterie (51) nach einem der vorhergehenden Ansprüche, wobei die Batteriezellen (12, 62) Rundzellen sind.

7. Batterie (51) nach einem der vorhergehenden Ansprüche, wobei bei den Batteriezellen (12, 62) jeweils ein weiterer Anschlusspol (22) an der Stirnseite (26) bereitgestellt ist.

8. Batterie (51) nach einem der vorhergehenden Ansprüche, wobei die Stirnseiten (26) in einer gemeinsamen Ebene angeordnet sind.

9. Batterie (51) nach einem der vorhergehenden Ansprüche, wobei eine elektrisch leitende Platte (70) als zweites Leitelement bereitgestellt ist, welche parallel zu den Stirnseiten (26) der Batteriezellen angeordnet ist, wobei jeweils ein Anschlusspol (22) der Batteriezellen (12, 62) mit der Platte (70) elektrisch verbunden ist.

10. Batterie (51) nach einem der vorhergehenden Ansprüche, wobei die Batteriezellen (12, 62) zu einer Parallelschaltung verschaltet sind.

## Claims

1. Battery (51) for a motor vehicle, comprising a plurality of battery cells (12, 62), each of which has a longitudinal axis (18) determined by the basic shape of the respective battery cell (12, 62) and an end face (26) extending perpendicular to the longitudinal axis (18) comprising at least one terminal (22, 24), wherein the battery cells (12, 62) are arranged axially parallel next to one another in at least two rows (14, 16), and an electrically conductive element (28), by means of which a terminal (24) of the battery cells (12, 62) of at least one of the two rows (14, 16) is connected electrically to a connecting element (68) for connecting the battery (51) to the motor vehicle, and which comprises at least one connecting area (30), in which an electrical coupling element(60) is secured for electrically connecting the conductive element (28) to at least one of the terminals (24), **characterised in that** the electrically conductive element (28) is arranged at least partly between the two rows (14, 16).

2. Battery (51) according to claim 1, wherein the conductive element (28) comprises an electrically conductive plate.

3. Battery (51) according to any one of the preceding claims, wherein in addition also a terminal of the battery cells (62) of the other row (14) is electrically connected via the conductive element (28) to the connecting element (68) of the battery (51).

4. Battery (51) according to any one of the preceding claims, wherein the conductive element (28) is coupled electrically via a busbar (66) to the connecting element (68).

5. Battery (51) according to any one of the preceding claims, wherein the conductive element (28) is a component of a holding element (10), into which the battery cells (12, 62) are inserted and by means of which they are held in a housing (52) of the battery (51).

6. Battery (51) according to any one of the preceding claims, wherein the battery cells (12, 62) are round cells.

7. Battery (51) according to any one of the preceding claims, wherein for the battery cells (12, 62) an additional terminal (22) is provided on the end face (26).

8. Battery (51) according to any one of the preceding claims, wherein the end faces (26) are arranged in a common plane.

9. Battery (51) according to any one of the preceding claims, wherein an electrically conductive plate (70) is provided as a second conductive element, which is arranged parallel to the end faces (26) of the battery cells, wherein a terminal (22) of the battery cells (12, 62) is connected electrically to the plate (70) respectively.

10. Battery (51) according to any one of the preceding claims, wherein the battery cells (12, 62) are connected to form a parallel circuit.

## Revendications

1. Batterie (51) pour un véhicule automobile, comprenant une pluralité d'éléments de batterie (12, 62), dont chacun présente un axe longitudinal (18) prédéfini par une forme fondamentale de l'élément de batterie respectif (12, 62) et une face avant (26) s'étendant transversalement à l'axe longitudinal (18) avec au moins un pôle de connexion (22, 24), dans laquelle les éléments de batterie (12, 62) sont aménagés en au moins deux rangées (14, 16) l'une à côté de l'autre parallèlement à l'axe et un élément conducteur électrique (28), par lequel respectivement un pôle de connexion (24) des éléments de batterie (16, 62) au moins d'une des deux rangées (14, 16) est connecté électriquement à un élément de connexion (68) pour connecter la batterie (51) au véhicule automobile et qui présente au moins une zone de connexion (30) dans laquelle un élément de couplage électrique (60) est fixé à au moins l'un des pôles de connexion (24) pour connecter électriquement l'élément conducteur (28), **caractérisée en ce que** l'élément conducteur électrique (28) est aménagé au moins par zones entre les deux rangées (14, 16).

2. Batterie (51) selon la revendication 1, dans laquelle l'élément conducteur (28) comprend une plaque électroconductrice.

3. Batterie (51) selon l'une quelconque des revendications précédentes, dans laquelle, en plus, respectivement un pôle de connexion des éléments de batterie (62) de l'autre rangée (14) est également connecté électriquement à l'élément de connexion (68) de la batterie (51) via l'élément conducteur (28).

4. Batterie (51) selon l'une quelconque des revendications précédentes, dans laquelle l'élément conducteur (28) est couplé électriquement à l'élément de connexion (68) via une barre omnibus (66).

5. Batterie (51) selon l'une quelconque des revendications précédentes, dans laquelle l'élément conducteur (28) est un composant d'un élément de retenue (10) dans lequel sont insérés les éléments de batterie (12, 62) et par lequel ils sont maintenus dans un boîtier (52) de la batterie (51).

6. Batterie (51) selon l'une quelconque des revendications précédentes, dans laquelle les éléments de batterie (12, 62) sont des éléments ronds.

7. Batterie (51) selon l'une quelconque des revendications précédentes, dans laquelle, dans les éléments de batterie (12, 62), un autre pôle de connexion (22) est respectivement prévu sur la face avant (26).

8. Batterie (51) selon l'une quelconque des revendications précédentes, dans laquelle les faces avant (26) sont aménagées dans un plan commun.

9. Batterie (51) selon l'une quelconque des revendications précédentes, dans laquelle une plaque électroconductrice (70) est prévue comme second élément conducteur qui est aménagé parallèlement aux faces avant (26) des éléments de batterie, dans laquelle un pôle de connexion (22) des éléments de batterie (12, 62) est respectivement lié électriquement à la plaque (70).

10. Batterie (51) selon l'une quelconque des revendications précédentes, dans laquelle les éléments de batterie (12, 62) sont câblés par montage en parallèle.
